# EUROPÄISCHE PATENTANMELDUNG

(11) **EP 1 844 892 A1**
(43) Veröffentlichungstag der Anmeldung: **17.10.2007**
(21) Anmeldenummer: 06112639.7
(22) Anmeldetag: 13.04.2006
(51) Int. Cl.: B23K 26/38, F01D 5/18, F01D 5/28, B23K 101/00

(54) **Verfahren zur Laserentfernung von Beschichtenmaterialen in Kühlenlöchern eines Turbinenbauteiles**

(71) Anmelder: Alstom Technology Ltd, 5400 Baden (CH)
(72) Erfinder: Hoebel, Matthias , Dr., 5210 Windisch (CH); Fehrmann, Bernd, 5400 Baden (CH); Kohles, Christoph, 71336 Waiblingen (DE); Franitza, Karsten, 5400 Baden (CH)

(57) **Zusammenfassung**

Die Erfindung betrifft ein Verfahren zur Entfernung von unerwünschtem Beschichtungsmaterial (5) aus Kühlungskanälen (3) eines Turbinenbauteils (1). In dem Verfahren zur Bearbeitung des Turbinenbauteils (1) mit Kühlungskanälen (3) werden Koordinaten der Position und Orientierung von Kühlungskanälen (3) an der Oberfläche des Turbinenbauteils (1) sowie Referenzpunkte (P₁,P₁',Pₙ,Pₙ') im Bereich der Kühlungskanäle (3) bestimmt. Nach einer Beschichtung des Turbinenbauteils (1) werden die Referenzpunkte (P₁',Pₙ') noch einmal vermessen und die Dicke (d₁) der Beschichtung (5) berechnet. In einem Grundbearbeitungsprogramm werden die Daten für die Position, Kanalorientierung und Beschichtungsdicken (d₁) sowie CAD-Daten der Kühlungskanäle (3) miteinander verknüpft und es wird automatisch ein Laser-Bearbeitungsprogramm für jeden individuellen Kühlungskanal (3) angepasst. Mittels dem Laser-Bearbeitungsprogramm wird ein gepulster Laser über scheibenförmige Volumensegmente des unerwünschten Beschichtungsmaterials (5) geführt und das Material (5) dabei entfernt. Das Verfahren ermöglicht eine verkürzte Bearbeitungszeit des gesamten Turbinenbauteils (1) und eine erhöhte Bearbeitungspräzision.

## Beschreibung

### Technisches Gebiet

Die Erfindung betrifft ein Verfahren zur Bearbeitung von Turbinenbauteilen und insbesondere von Kühlungskanälen an Turbinenbauteilen, wie zum Beispiel Gasturbinenschaufeln.

### Stand der Technik

Während des Betriebs einer Gasturbine werden die Bauteile, unter anderem Turbinenschaufeln, Schaufelträger und Schaufelplattformen, Heissgastemperaturen von über 1400°C ausgesetzt. Die Turbinenbauteile im Heissgasbereich werden mit einer metallischen Oxidationsschicht sowie auch häufig mit einer keramischen Wärmedämmschicht, auch "thermal barrier coating" (TBC) genannt, versehen, sodass das Material diesen Temperaturen widerstehen kann. Zusätzlich werden die Turbinenbauteile mittels Kühlluft gekühlt, die durch ein komplexes System von Kühlungskanälen strömt. Die Kühlungskanäle münden zur Oberfläche der Bauteile und weisen im Bereich der Oberfläche oft eine spezifische dreidimensionale Form, die eine Filmkühlung der Bauteiloberfläche durch die Kühlluft gewährleistet. Um einen sicheren Betrieb der Turbine zu garantieren, werden bestimmte Bauteile, insbesondere Turbinenschaufeln, nach einem Betriebsintervall, beispielsweise von 20000 Stunden, ausgebaut und ersetzt. Dabei ist es kommerziell vorteilhaft, Turbinenschaufeln zu rekonditionieren und erneut für ein Betriebsintervall einzusetzen. Bei einer Rekonditionierung werden typischerweise die Schutzschichten entfernt und neu aufgetragen, wobei die Austrittsöffnungen der Kühlungskanäle durch das neu aufgetragene Schutzschichtmaterial verstopft werden. Um eine volle Kühlleistung zu erreichen, müssen die Kühlungskanäle wieder geöffnet werden, wobei die Geometrie der ursprünglichen Kühlluftlöcher vorzugsweise möglichst genau wieder hergestellt werden soll.
Bei einer heute eingesetzten Turbinenschaufel sind beispielsweise mehrere hundert einzelne Kühlungskanäle an den Oberflächen verteilt, die sich beispielsweise in etwa zwanzig verschiedene Grundtypen von Kanälen einteilen lassen. Die Grundtypen unterscheiden sich beispielsweise in ihrer Orientierung gegenüber der Oberfläche des Turbinenbauteils, in der Grösse ihres Querschnitts oder in den Ausbreitungswinkeln im Austrittsbereich der Kühlungskanäle.
Eine Neubeschichtung wird in vielen Fällen durch ein Plasma-Spritzen und mit möglichst senkrechter Spritzrichtung zur Bauteiloberfläche ausgeführt. Die Verstopfung der einzelnen Kühlungskanäle ergibt sich deshalb sehr unterschiedlich, je nach Orientierung und Querschnittsgrösse der Kanäle sowie ihrer Lage bezüglich der Kontur des Bauteils. Zusätzlich ist die Wiederherstellung der ursprünglichen Kanalgeometrie durch grosse Toleranzen des Plasma-Spritzprozesses erschwert, indem die Dicke des verstopfenden Materials nur beschränkt vorhergesagt werden kann.

EP 1 510 283 offenbart ein Verfahren zur Wiederherstellung von Kühlungskanälen in Turbinenschaufeln. Zunächst wird mit Hilfe charakteristischer Merkmale des Bauteils ein lokales Referenzkoordinatensystem erstellt. In einem automatisierten Scanning-Prozess werden die dreidimensionalen Positionen und Orientierungen jedes Kühlungskanals bestimmt, die auf ein lokales Referenzkoordinatensystem bezogen sind. Die Positions- und Orientierungsdaten werden dann zur Entfernung des verstopfenden Beschichtungsmaterials und Wiederherstellung des ursprünglichen Kühlungskanals verwendet. Die Entfernung des unerwünschten Materials erfolgt durch Verdampfen mittels eines gepulsten Lasers (laser ablation).

### Darstellung der Erfindung

Es ist der vorliegenden Erfindung die Aufgabe gestellt, ein Verfahren zur Bearbeitung eines Turbinenbauteils mit einer Vielzahl von geometrisch unterschiedlichen Kühlungskanälen zu schaffen. Die Bearbeitung soll eine Neubeschichtung enthalten sowie eine Befreiung der Kühlungskanäle von Beschichtungsmaterial, welches die Kühlungskanäle während der Beschichtung verengt hat. Das Verfahren soll im Vergleich zu den Verfahren des Standes der Technik sowohl bezüglich der Bearbeitungszeit als auch der Bearbeitungsqualität, insbesondere der Bearbeitungspräzision, optimiert sein. Insbesondere soll das Verfahren jedem individuellen Kühlungskanal am Turbinenbauteil anpassbar sein.

Diese Aufgabe wird durch ein Verfahren gemäss den Patentansprüchen gelöst.

Erfindungsgemäss wird ein Turbinenbauteil, in mehreren Verfahrensschritten zur Neubeschichtung und Befreiung der Kühlungskanäle von Beschichtungsmaterial bearbeitet. Das Turbinenbauteil weist eine Vielzahl von (bezüglich ihrer Geometrie) unterschiedlichen Kühlungskanälen auf und ist zu Beginn des Verfahrens unbeschichtet. Das Turbinenteil kann also ein neu gefertigtes Turbinenbauteil sein, das noch nicht beschichtet worden ist, oder ein Turbinenbauteil sein, das bereits in Betrieb gewesen ist und dessen Beschichtung entfernt worden ist.
In einem ersten Verfahrensschritt wird am beschichtungsfreien Turbinenbauteil ein lokales Referenzkoordinatensystem erstellt und dreidimensionale Koordinaten für jeweils die Position der Kühlungskanäle an der Oberfläche des Bauteils und die Orientierungen der Kühlungskanäle im Raum bestimmt.
In einem zweiten Verfahrensschritt werden verschiedene Referenzpunkte im Bereich der Austrittsöffnungen der Kühlungskanäle am Turbinenbauteil bestimmt. In einer bevorzugten Ausführung des Verfahrens werden die Referenzpunkte auf einer Linie jeweils um den Mittelpunkt des Austrittslochs eines Kühlungskanals gewählt.
In einem dritten Verfahrensschritt wird das Turbinenbauteil mit einer neuen Beschichtung versehen.
In einem vierten Verfahrensschritt werden die im zweiten Schritt festgelegten Referenzpunkte am Turbinenbauteil wiederum vermessen und aus den Messdaten zusammen mit den Koordinaten der Referenzpunkte aus dem zweiten Schritt die Abstände zwischen den Referenzpunkten vor und nach der Beschichtung bestimmt und die lokale Beschichtungsdicke im Bereich der Kühlungskanäle berechnet.

In einem fünften Schritt wird für jeden individuellen Kühlungskanal am Turbinenbauteil automatisch ein Laser-Bearbeitungsprogramm erzeugt. Hierzu werden mittels einem Grundbearbeitungsprogramm die Daten aus den vorhergehenden Verfahrensschritten, also Positions- und Orientierungsdaten und Schichtdickendaten im Bereich des Kühlungskanalaustritts, sowie zudem CAD-Daten der individuellen Kühlungskanäle, die aus der Fertigung des Turbinenbauteils bekannt sind, miteinander verknüpft. Aus den Schichtdickenmessungen um die Austrittsöffnungen der Kühlungskanäle zusammen mit CAD-Daten für die Kühlungskanäle, die aus der Fertigung des Turbinenbauteils bekannt sind, wird ein Volumenmodell des unerwünschten Beschichtungsmaterials in den Kühlungskanälen erzeugt. Dieses Volumenmodell wird sodann in eine Anzahl aufeinanderliegende, scheibenförmige Volumensegmente unterteilt. Das automatisch erstellte Laser-Bearbeitungsprogramm erstellt automatisch Parameterwerte und geometrische Daten für die Führung eines gepulsten Lasers über die einzelnen scheibenförmigen Volumensegmente zur Entfernung des unerwünschten Beschichtungsmaterials aus dem Kühlungskanal. Das Laser-Bearbeitungsprogramm enthält die geometrischen Koordinaten für die Führung des Lasers, sowie Werte der Laserleistung, Laserpulsenergie, Pulsdauer, Pulsrepetitionsrate, Pulshöhe, Überlappung einander nachfolgender Pulse, Laserbewegungsgeschwindigkeit relativ zum Turbinenbauteil sowie der Wiederholungsrate der Bewegungen über ein gegebenes scheibenförmiges Volumensegment. Die individuelle Anpassung der Laserbearbeitung auf jeden einzelnen Kühlungskanal jedes einzelnen Bauteils erfolgt über ein Grundbearbeitungsporgramm, das nach festgelegten Regeln automatisch modifiziert wird. Dazu werden gemessene Positionen, Orientierungen und Schichtdicken verwendet.

In einem sechsten und letzten Schritt, wird ein gepulster Laser durch Steuerung gemäss dem im fünften Schritt erstellten Laser-Bearbeitungsprogramms über die einzelnen, scheibenförmigen Volumensegmente geführt und dabei das unerwünschte Beschichtungsmaterial durch Verdampfung entfernt. Für den Präzisionsbearbeitungsprozess ist dabei der Materialabtrag und die Abtragsrate auf die unterschiedlichen Kühlungskanalgeometrien und die unterschiedlichen Beschichtungsdicken jeweils angepasst.

Das automatisch erstellte Bearbeitungsprogramm ermöglicht die individuelle Bearbeitung jedes einzelnen Kühlungskanals gemäss der vorhandenen Schichtdicke. Durch die Automatisierung der Erstellung des Programms für jeden Kühlungskanal ist die Vorbereitungszeit für jede individuelle Anpassung des Laser-Bearbeitungsprogramms im Vergleich zu Verfahren des Standes der Technik stark vermindert.
Aufgrund der Automatisierung gemäss der Erfindung ist die Wiederherstellung der Kühlungskanäle nach einer Beschichtung in einer vertretbaren Bearbeitungsdauer durchführbar.

Im Verfahren gemäss EP 1 510 283 wird im Gegensatz eines einzelnen Typs von Kühlungskanal bearbeitet. Mit dem dortigen Verfahren wäre eine Bearbeitung von unterschiedlichen Kühlungskanälen nur durch individuelle Anpassung der Laserparameter und Koordinaten auf jeden einzelnen Kühlungskanal möglich. Zudem ist aufgrund von fehlender Schichtdickeninformation nur eine begrenzte Präzision der Materialbearbeitung möglich.

### Kurze Beschreibung der Zeichnungen

Das erfindungsgemässe Verfahren wird aufgrund der folgenden Figuren näher erläutert. Es zeigen:

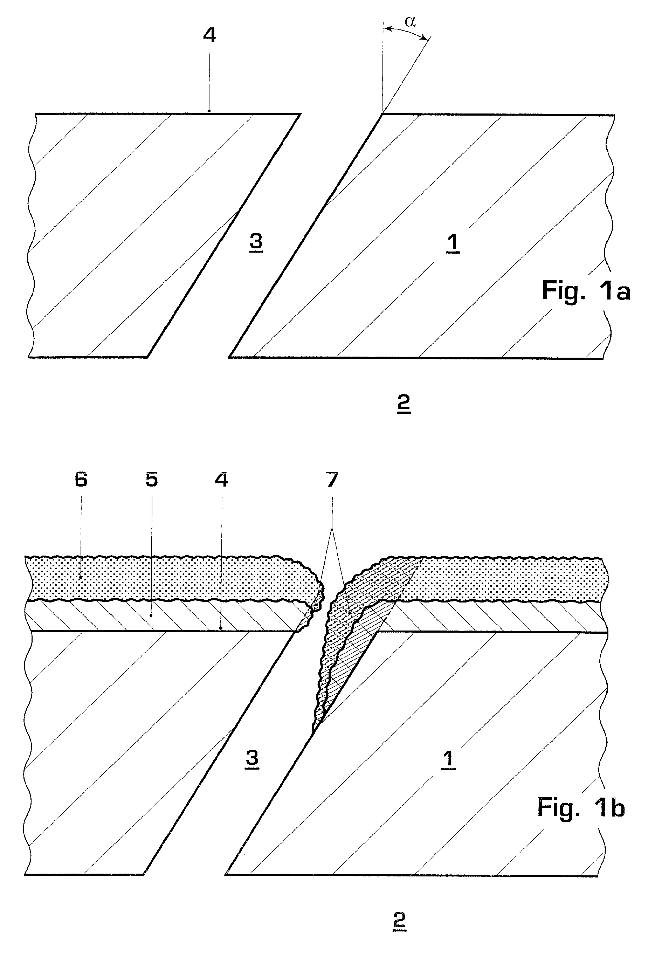

Figur 1a einen Ausschnitt eines Turbinenbauteils mit einem Kühlungskanal,
Figur 1 b den Ausschnitt eines Turbinenbauteils mit einem Kühlungskanal von 1a nachdem das Turbinenbauteil beschichtet worden ist,
Figur 2 ein Flussdiagramm der erfindungsgemässen Verfahrensschritte zur Bearbeitung der Kühlungskanäle im Fall von unerwünschtem Material in den Kühlungskanälen,
Figuren 3a-d eine schematische Darstellung der Verfahrensschritte zur Vermessung der Beschichtungsdicken, wovon

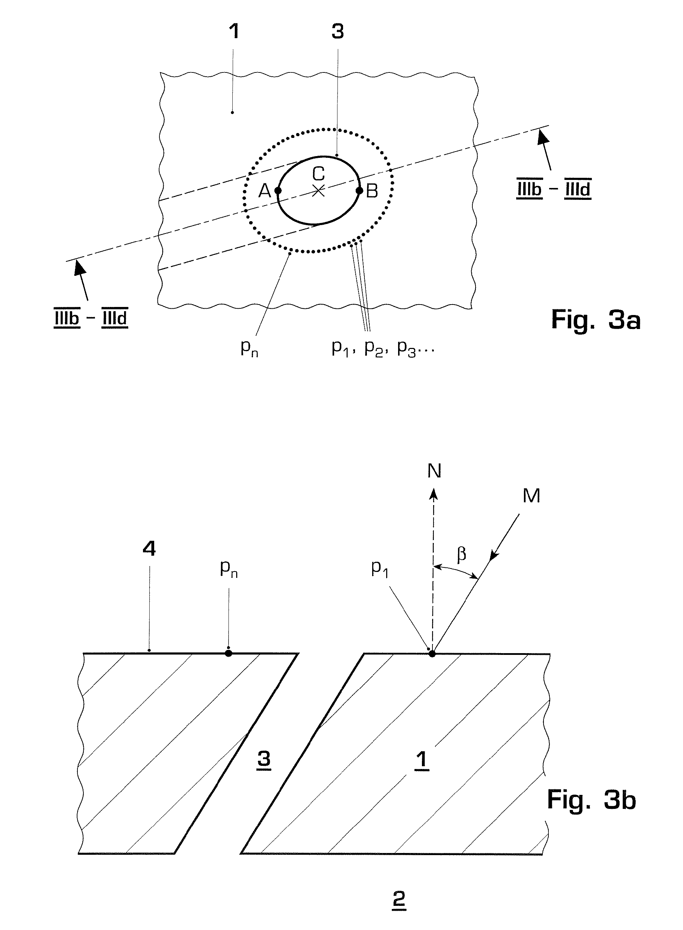

Figur 3a eine Draufsicht eines Kühlungskanals am Turbinenbauteil und
Referenzpunkte auf einer Kreislinie um den Kühlungskanal zeigt, und
Figuren 3b-d die Vermessung ausgewählter Punkte auf der Oberfläche ohne Beschichtung, mit einer Schicht bzw. mit zwei Schichten darstellt,

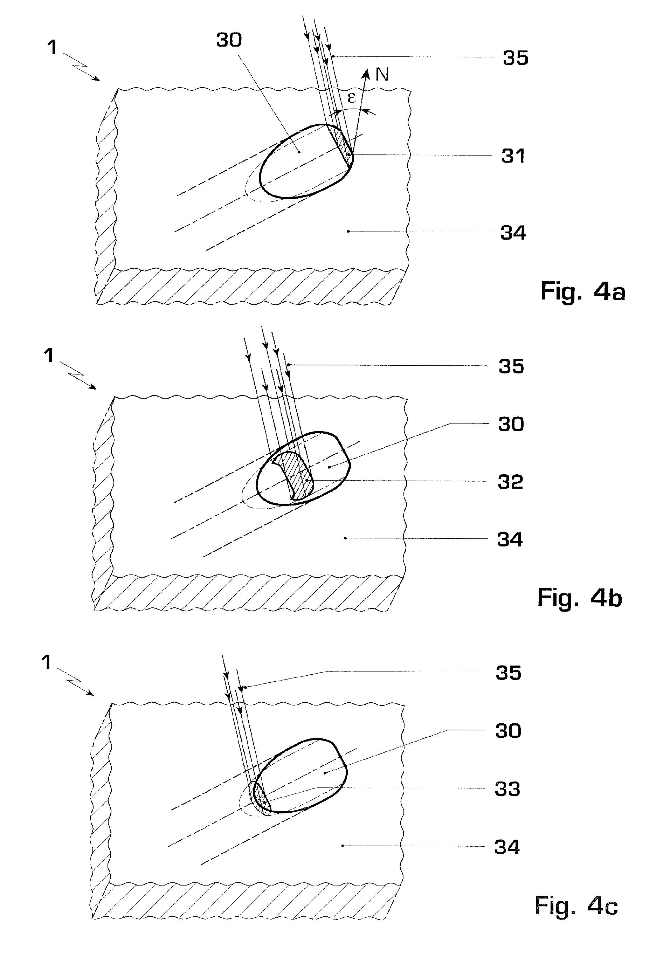

Figur 4a-c Beispiele von scheibenförmigem, durch den Laser zu entfernenden Beschichtungsmaterial in einem Kühlungskanal, wobei Figuren 4a-c je eine Scheibe in verschiedenen Tiefen von der Oberfläche des Turbinenbauteils darstellen,

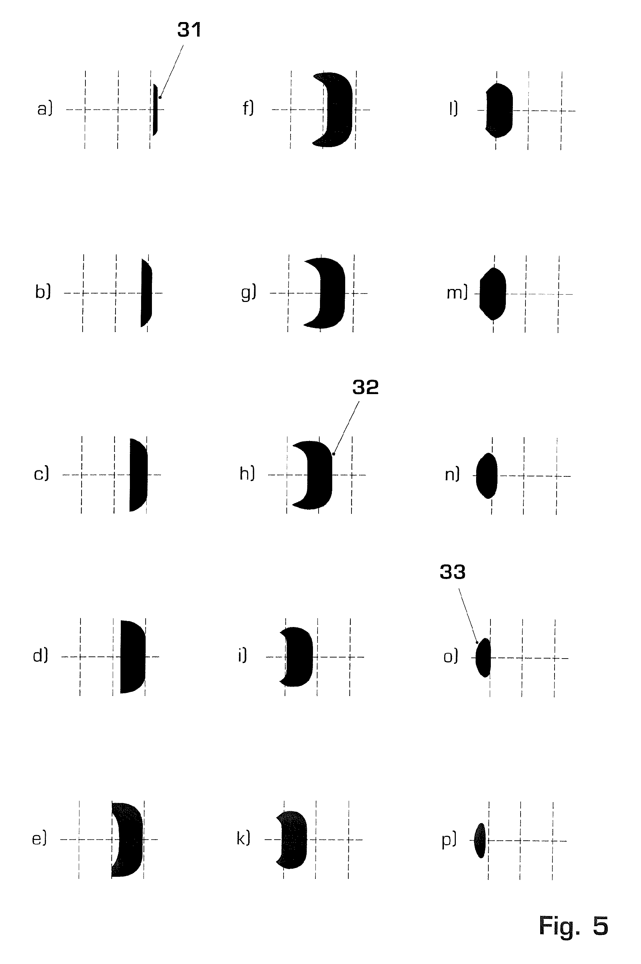

Figur 5a-p ein Beispiel einer Sequenz von verschiedenen scheibenförmigen Segmenten von Beschichtungsmaterial, das als Grundlage für das Bewegungsmuster für einen Laser zur Entfernung von unerwünschtem Beschichtungsmaterial aus einem Kühlungskanal dient.

### Ausführung der Erfindung

Figur 1a zeigt einen stark vergrösserten Ausschnitt eines Turbinenbauteils 1, zum Beispiel einer gekühlten Gasturbinenschaufel, mit einem Hohlraum 2 und einem Kühlungskanal 3, zum Beispiel einer Formbohrung oder einem durch Giessen hergestellten Kühlungskanal, für eine Kühlströmung, beispielsweise Luft, ein anderes Gas oder Wasserdampf. Der Kühlungskanal 3 führt vom Hohlraum 2 zur Oberfläche 4 des Turbinenbauteils 1. In typischen Fällen ist ein Kühlungskanal 3 in einem flachen Winkel α zur Oberfläche 4 gerichtet, beispielsweise um 70° zur Oberflächennormalen, was in der Regel einer Filmkühlung der Oberfläche dient. Die Kühlungskanäle sind häufig zylindrisch, jedoch auch mit sich ausweitenden Austrittsbereich ausgeführt. Figur 1a zeigt das Turbinenteil nachfolgend einer bestimmten Betriebszeit in einer Turbine und nachdem im Zusammenhang mit einer üblichen Rekonditionierung des Turbinenbauteils zunächst die ursprüngliche Schutzbeschichtung auf der Oberfläche des Turbinenbauteils entfernt worden ist. Figur 1 b zeigt das gleiche Turbinenbauteil 1 mit dem Kühlungskanal 3 nach einer neuen Schutzbeschichtung. Die Schutzbeschichtung besteht beispielsweise aus zwei Schichten, einer ersten metallischen Schicht 5 und einer zweiten Wärmedämmschicht 6 (thermal barrier coating TBC). Im Bereich des Kühlungskanalausgangs befindet sich Beschichtungsmaterial, welches den ursprünglichen Kühlungskanal an ihrem Ausgang verengt und die Kühlströmung und somit die Kühlleistung des Kühlungskanals stark beeinträchtigen würde. Zudem würde die veränderte Form des Kanalausgangs auch die Richtung der austretenden Kühlströmung verändern und eine Filmkühlung nicht mehr gewährleisten, wodurch wiederum die Kühlleistung beeinträchtigt wäre. Im Hinblick auf die ursprüngliche Kühlleistung des Kanals ist das schraffiert dargestellte Beschichtungsmaterial 7 unerwünscht.
Ein typisches Turbinenbauteil, wie zum Beispiel eine Turbinenschaufel, weist mehrere hundert solcher Kühlungskanäle auf, wobei diese sich in Durchmesser, Orientierung relativ zur Oberfläche des Turbinenteils sowie in Ausbreitungswinkel im Bereich des Kanalaustritts unterscheiden.

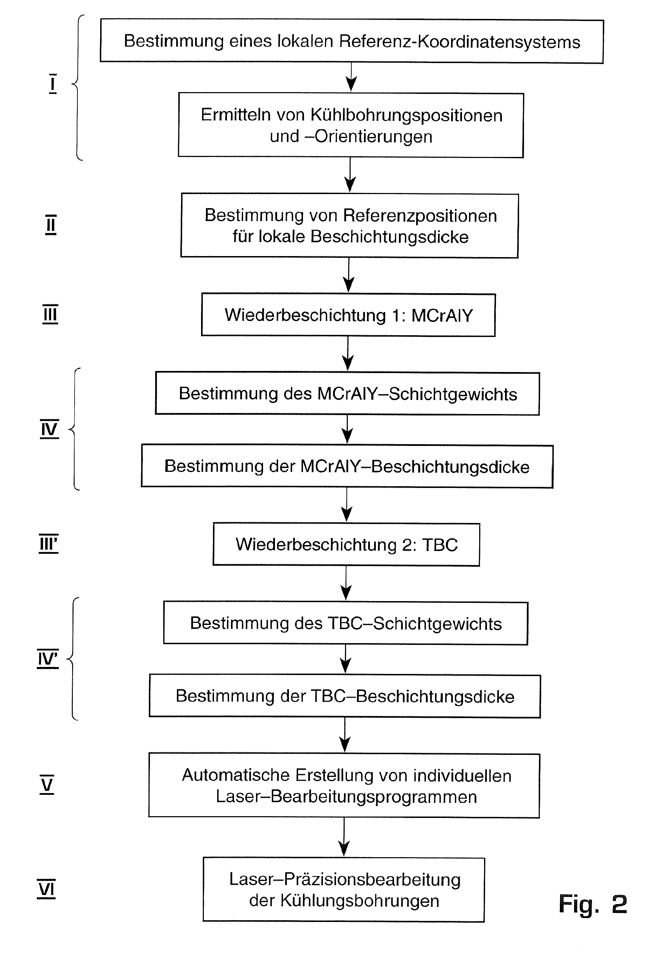

Gemäss dem Flussdiagramm in Figur 2 wird im ersten Schritt I des Verfahrens für ein unbeschichtetes Turbinenbauteil zunächst ein lokales ReferenzKoordinatensystem bestimmt. (Das Turbinenbauteil ist beispielsweise bereits in Betrieb gewesen, von dem zwecks Rekonditionierung die bestehende Beschichtung entfernt worden ist.) Für das lokale Referenzkoordinatensystem wird das Bauteil in einer Halterung befestigt. Anhand von charakteristischen Formen, wie beispielsweise Kanten, Vertiefungen, Dichtnuten oder anderen besonderen Geometrien des Turbinenbauteils, werden mehrere diskrete Punkte vermessen, mit denen ein lokales Koordinatensystem auf dem Turbinenbauteil erzeugt wird.
Danach werden die räumlichen Koordinaten der Kühlungskanalpositionen an der Oberfläche des Turbinenbauteils sowie räumliche Richtungsvektoren der Kühlungskanäle bestimmt. Schritt I, sowie auch die nachfolgenden Schritte II und IV, können beispielsweise mittels einem Laser-Abstandssensor zusammen mit einem hochauflösenden Kamerasystem, die beide auf einem Industrieroboter montiert sind, durchgeführt.

Gemäss dem zweiten Schritt II werden relativ zum lokalen Koordinatensystem mittels dem Abstandssensor Referenzpunkte am Turbinenbauteil bestimmt, die in einem späteren Schritt für die Bestimmung der lokalen Beschichtungsdicke, das heisst der Beschichtungsdicke im Bereich der Austrittsöffnungen der Kühlungskanäle, verwendet werden. Geeignete und bevorzugte Referenzpunkte sind Punkte auf einer Kreislinie um den Mittelpunkt des Kühlungskanalaustritts, wie es in Figur 3a dargestellt ist. Die Referenzpunkte können auch auf einer beliebigen Linie um die Austrittsöffnungen der Kühlungskanäle gewählt werden, die der Form der Austrittsöffnung angepasst ist. Der Mittelpunkt C wird durch spezifische Algorithmen des robotergesteuerten Abstandssensorsystems ermittelt und ist als Ergebnis der Kühlungskanalbestimmung direkt verfügbar. Randpunkte A und B können aus den vorhandenen CAD-Daten ermittelt werden.

Die Koordinaten von Referenzpunkten P₁, P₂, P₃, ..... Pₙ auf einer Kreislinie um den Mittelpunkt C werden sodann zur Verwendung in Schritt IV gespeichert. Insbesondere wird hier die Vermessung der Referenzpunkte P₁, P₂, P₃, ..., Pₙ entweder unter normalem Winkel oder auch unter einem, entsprechend der Geometrie des Turbinenteils möglichen Winkel zur Oberfläche des Turbinenteils ausgeführt. Der Messwinkel β wird je nach Form und Kontur des Turbinenteils und der Zugänglichkeit der Messpunkte durch den Mess-Sensor gewählt. In einer bevorzugten und in Figur 3b dargestellten Ausführung wird die Messung entlang der Längsachsrichtung M des Kühlungskanals 3 durchgeführt, wobei der Messwinkel β der Winkel zwischen der Messrichtung M und der Normalen N auf der Oberfläche 4 des Bauteils 1 ist.

Im dritten Verfahrensschritt III wird das Turbinenbauteil mit einer ersten, neuen Schutzschicht versehen. Am gezeigten Beispiel ist dies eine metallische Schutzschicht, zum Beispiel MCrAIY (wobei M für Ni oder Co steht).

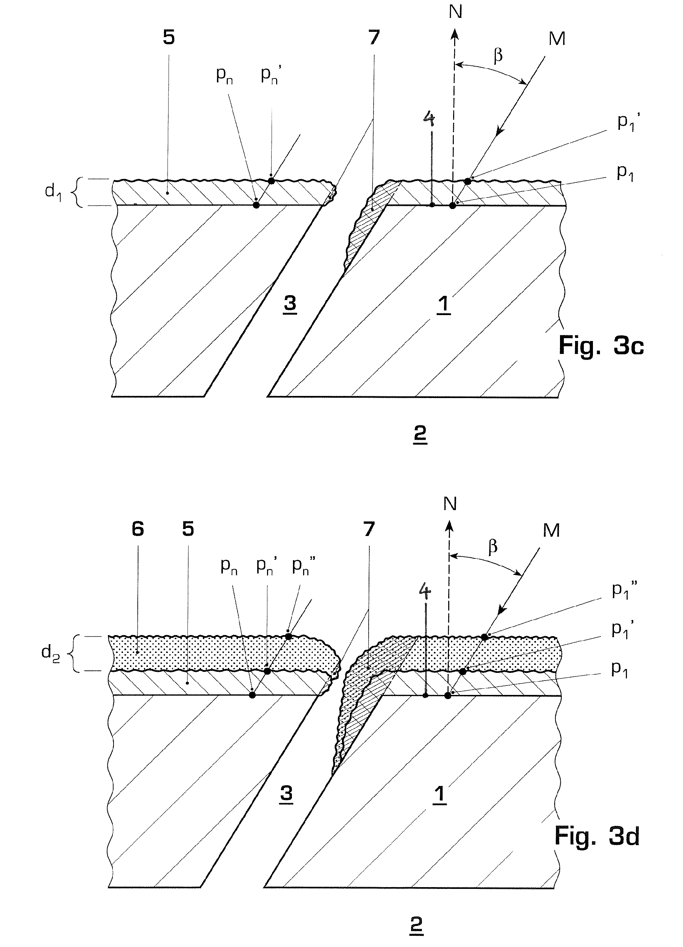

In Schritt IV wird die Dicke der Beschichtung d₁ bestimmt. Es werden, wie in Figur 3c gezeigt, die Referenzpunkte P₁', P₂', P₃', ..., Pₙ' auf der Kreislinie aus Schritt 11 noch einmal mittels einem Abstandssensor vermessen und relativ zum lokalen Koordinatensystem gespeichert. Für die Abstandsmessung in Schritt IV, sowie auch in den Schritten I und II, kann beispielsweise ein konoskopischer Messkopf, wie in dem schweizerischen Patentgesuch Nr. 2006 0169/06 beschrieben, verwendet. Weitere geeignete Abstandsmessgeräte sind ein berührungsloser optischer Laserabstandssensor gemäss Triangulationsprinzip, ein berührungsloser optischer konoskopischer Abstandssensor, ein berührungsloser optischer interferometrischer Abstandssensor, ein Messtaster ("touch probe") oder Wirbelstromsensoren. Die Dicke der Beschichtung d₁ wird mittels der Abstände zwischen den vermessenen Referenzpunkten P₁, P₂, P₃, ..., Pₙ und P₁', P₂', P₃', ..., Pₙ' festgestellt. Die Schichtdicke wird sodann unter Berücksichtigung des Messwinkels β und der Projizierung auf die Flächennormale N bestimmt.
Die Schichtdicke an Punkten in der Austrittsöffnung eines Kühlungskanals wird mittels Extrapolierung ermittelt.

Die nachfolgenden Schritte III' und IV' sind eine Wiederholung der Schritte III und IV, jedoch für eine zweite Schicht. Im Schritt III' wird die zweite Schutzschicht, beispielsweise eine keramische Wärmedämmschicht auf die erste Schicht 5 aufgetragen und im nachfolgenden Schritt IV' wiederum die Referenzpunkte P₁", P₂", P₃", ..., Pₙ" auf der Kreislinie aus Schritt 11 und Schritt IV mittels dem Abstandssensor relativ zum lokalen Koordinatensystem vermessen und gespeichert. Analog zur ersten Schicht wird mittels der Abstände zwischen den Punkten P₁', P₂', P₃', ..., Pₙ' und P₁", P₂", P₃", ..., Pₙ" und wiederum unter Berücksichtigung des Messwinkels die Schichtdicke d₂ der Wärmedämmschicht bestimmt, wie in Figur 3d dargestellt.

Die Vermessung der Referenzpunkte vor und nach jeder Beschichtung wird jeweils bezüglich des lokalen Koordinatensystems durchgeführt. Hierzu müssen natürlich die charakteristischen Merkmale oder Geometrien, die zur Erzeugung des lokalen Koordinatensystems verwendet werden, unbeschichtet bleiben. Um zu gewährleisten, dass diese charakteristischen Konturen unversehrt und unbeschichtet bleiben, werden sie vor der Beschichtung mit Blechen oder ähnlich geeigneten Vorrichtungen abgedeckt. Beispielsweise werden Abdeckbleche durch Punktschweissen angebracht oder geklemmt, wobei die Abdeckbleche wieder abnehmbar sind und die Oberflächen nicht beeinträchtigt werden.

Es ergibt sich bei der Schichtdickenbestimmung eine einfache Relativbeziehung zwischen zwei nacheinander durchgeführten Messungen. Diese Methode ermöglicht, dass ein langes Zeitintervall zwischen Messungen und sogar ein vorübergehendes Entfernen des Turbinenbauteils aus der Halterung zulässig ist, beispielsweise zwecks weiterer Bearbeitung oder Vermessung, ohne dass die Präzision der Messung beeinträchtigt wird.

In Schritt V wird mit Hilfe der gespeicherten Daten für Position und Orientierung der einzelnen Kühlungskanäle und den lokalen Beschichtungsdicken im Bereich der einzelnen Kühlungskanäle sowie CAD-Daten der Kühlungskanäle ein dreidimensionales Modell des unerwünschten Beschichtungsmaterials in den Kühlungskanälen erzeugt. Dieses Volumen wird sodann in eine Vielzahl einzelner scheibenförmiger Volumensegmente unterteilt. Mittels einem Grundbearbeitungsprogramm wird sodann automatisch für jeden Kühlungskanal ein individuelles Laser-Bearbeitungsprogramm zur Entfernung der einzelnen scheibenförmigen Volumensegmente des Beschichtungsmaterials in den Kühlungskanälen erstellt. Hierzu wird zunächst aus mehreren verschiedenen Grundbearbeitungsprogrammen ein geeignetes Grundprogramm ausgewählt. Beispielsweise wird aus drei Grundbearbeitungsprogrammen für einen bestimmten Kühlungskanal ausgewählt, wovon das erste auf eine dünne zu erwartende Schichtdicke, das zweite auf eine mittlere Schichtdicke und das dritte auf eine grosse Schichtdicke ausgerichtet ist. Entsprechend der um die Kühlungskanäle gemessenen Schichtdicken wird das geeignete Grundbearbeitungsprogramm gewählt.
Bei der Erstellung der Laser-Bearbeitungsprogramme wird das ausgewählte Grundprogramm entsprechend der gemessenen Daten für die individuellen Kühlungskanäle angepasst. Insbesondere werden hier die Daten für Position, Orientierung des Kanals bezüglich der Bauteiloberfläche sowie die genauen Schichtdickendaten eingebracht. Das Grundprogramm wird dabei bezüglich der folgenden Laserbearbeitungsparameter individuell angepasst:
- mittlere Laserleistung,
- mittlere Laserpulsenergie,
- Pulsrepetitionsrate,
- Überlappung von einander nachfolgenden Laserpulsen,
- Laserbewegungsgeschwindigkeit relativ zur Geschwindigkeit der Turbinenbauteilbewegung,
- Auswahl der scheibenförmigen Volumensegmente,
- Anzahl Wiederholungen der Bewegung des Lasers über ein gegebenes scheibenförmiges Volumensegment.
   Die für die Anpassung nötigen Entscheidungskriterien werden zum Teil durch vorgängige Kalibrationsmessungen bestimmt.
   Das Laser-Bearbeitungsprogramm enthält Vorgaben für die Führung eines gepulsten Lasers mittels einem Laser-Galvano-Scanner zur Entfernung jedes einzelnen scheibenförmigen Volumensegments durch wiederholte Bewegungen über den Flächenbereich jedes scheibenförmigen Volumensegments.
   Durch die automatische Erstellung der Laserbearbeitungsprogramme und die automatische Anpassung der erwähnten Laserbearbeitungsparameter für jeden Kühlungskanal gemäss vorgegebenen Entscheidungskriterien wird insbesondere die Vorbereitungsdauer zur individuell angepassten Laserbearbeitung für das gesamte Turbinenbauteil im Vergleich zu Verfahren des Standes der Technik stark verkürzt. Zudem ist durch die individuelle Anpassung auch eine vergleichsweise erhöhte Präzision ermöglicht.

In einer ersten Ausführung des erfindungsgemässen Verfahrens wird für jeden Kühlungskanal ein individuell angepasstes Laserbearbeitungsprogramm dieser Art erstellt, wobei im Vorfeld die Schichtdickenmessung für jeden einzelnen Kühlungskanal des Turbinenbauteils durchgeführt wird.

Zur Steigerung der Verfahrensgeschwindigkeit wird in einer weiteren Ausführung des Verfahrens die Schichtdickenmessung nur an einer definierten Anzahl von Kühlungskanälen, die für eine Gruppe von Kühlungskanälen repräsentativ sind (wie zum Beispiel nur ausgewählte Kühlungskanäle in einer Kühlungskanalreihe), durchgeführt. Die Schichtdicke an den nicht gemessenen Kühlungskanälen wird sodann aufgrund der Messwerte extrapoliert oder intrapoliert. Dadurch wird der Mess- und Speicheraufwand reduziert.

In einer weiteren Ausführung, ebenfalls zur Reduzierung der Verfahrensdauer, werden nur an einzelnen auserwählten Turbinenbauteilen eines Satzes von identischen Turbinenbauteilen die Schichtdickenmessungen vorgenommen und jeweils die Verteilungen der Schichtdicken über die gesamten vermessenen Turbinenbauteile mit dem Gewicht der Beschichtungen verglichen. Unter der Annahme, dass die Dickenverteilungen für alle Turbinenbauteile eines Satzes gleich sind, die im gleichen Beschichtungsablauf beschichtet worden sind, werden die Schichtdickenverteilungen der restlichen Turbinenbauteile in dem Satz durch Bestimmung des Schichtgewichts dieser Bauteile skaliert, beispielsweise durch Wägen des Turbinenteils vor und nach der Beschichtung.

In Schritt VI wird sodann das unerwünschte Beschichtungsmaterial in den Kühlungskanälen durch Laserverdampfung mittels dem geführten Laser entfernt. Hierzu wird beispielsweise der Bearbeitungslaser über einen Scanner auf einer Laser-CNC-Anlage geführt.
Figuren 4a-c zeigen für einen Kühlungskanal 30 je ein Beispiel von scheibenförmigen Volumensegmenten 31-33, jeweils in verschiedenen Tiefen von der Oberfläche 34 des Turbinenbauteils 1, die mittels einem gepulsten Laser entfernt werden. Figur 4a zeigt das Segment 31 in sehr kleiner Tiefe von der Oberfläche 34. Es sind Laserstrahlen 35 angedeutet, die in einem Bearbeitungswinkel ε zur Oberfläche auf das Segment 31 gerichtet sind.
Figur 4b und 4c zeigen weitere Segmente 32 bzw. 33, bei einer mittleren bzw. grossen Tiefe von der Oberfläche sowie die Laserstrahlen 35, die zu ihrer Entfernung auf sie gerichtet sind. In dem gezeigten Beispiel verläuft der Kühlungskanal 30 in einem Winkel von 30° zur Oberfläche 34 des Turbinenbauteils 1. Der Laserbearbeitungswinkel ε beträgt 80°. Jede bearbeitete und entfernte Schicht 32 besitzt eine Dicke von ca. 50 µm.
Figuren 5a bis 5p zeigen eine Sequenz von scheibenförmigen Volumensegmenten des Beschichtungsmaterials im Kühlungskanal 30 aus den Figuren 4a-c, die durch einen gepulsten Laser entfernt werden, wobei die Volumensegmente von Figuren 5a, 5h und 5p jeweils jenen von Figur 4a, 4b bzw. 4c entsprechen.

Der Laser ist vorzugsweise ein gepulster Laser, wie zum Beispiel ein Festkörper-Laser, Faserlaser oder Scheibenlaser mit Pulslängen in einem Bereich von 5-2000 ns und einer Intensität in einem Bereich von 5.10⁶ W/cm² bis 3 *10⁹ W/cm². Die einzelnen Pulse besitzen vorzugsweise Energien im Bereich von 0.5mJ bis 50mJ. Solche Pulse erlauben die Entfernung von Beschichtungsmaterial wie TBC und MCrAIY durch Verdampfung.

Ein Volumensegment besitzt eine Dicke von beispielsweise 50 oder 100 Mikrometer. Jedes Segment wird durch wiederholte Bewegung des Lasers über den Bereich des Segments entfernt, wobei für jedes Segment jeweils ein Satz von Laser- und Prozessparametern vorgegeben ist. Entsprechend dieser Parameter ergibt sich die Abtragungsrate pro Laserbewegung über den Flächenbereich des Segments und damit die Anzahl von notwendigen Wiederholungen der Laserbewegungen über den Flächenbereich eines Segments. Die Prozess- und Laserparameter sind beispielsweise die mittlere Laserleistung, die mittlere Laserpulsenergie, die Pulsrepetitionsrate, sowie die zeitliche und räumliche Überlappung von aufeinander folgenden Laserpulsen. Weitere Parameter sind auch die lokale Geschwindigkeit der Laserbewegung relativ zur Bearbeitungsfläche. Die Abtragungsrate kann dabei entweder aufgrund der vorgegebenen Laser- und Prozessparameter und unabhängigen Kalibrationsmessungen vorbestimmt werden, oder sie kann auch während des Bearbeitungsprozesses durch eine geeignete Sensorvorrichtung, wie zum Beispiel eine Tastprobe oder einen berührungslosen, optischen Sensor bestimmt werden.

Je nach Abtragungsrate ergeben sich beispielsweise 5-30 Wiederholungen der Laserbewegungen pro Volumensegment.

In einer bevorzugten Ausführung des erfindungsgemässen Verfahrens wird die Messung der Position der Kühlungskanäle und der Beschichtungsdicke mit einem Messaufbau ausgeführt bestehend aus einem Industrieroboter, auf dem der Messkopf für die Abstandsmessung und das Kamerasystem befestigt sind, sowie einem Drehtisch, auf dem das Turbinenbauteil aufgebaut ist. Der Drehtisch bewegt sich unabhängig vom Industrieroboter um eine eigene Achse. Der Industrieroboter dient dazu, den Messkopf für jede Messung bezüglich dem Turbinenbauteil jeweils neu auszurichten. Die Platzierung des Turbinenbauteils auf dem Drehtisch ermöglicht, dass nicht nur der Industrieroboter für die Ausrichtung des Messkopfs bezüglich dem Turbinenbauteil bewegt wird, sondern auch das Turbinenbauteil selbst seine Ausrichtung mittels des Drehtischs bezüglich dem Messkopf ausgerichtet wird. Dies erlaubt, dass der Industrieroboter insgesamt kleinere Bewegungen durchführt und grosse Achsbewegungen des Roboters entfallen. Dadurch ergibt sich der Vorteil, dass systematische Positionierfehler des Industrieroboters, die bei jeder Achsbewegung kumuliert werden, um Faktoren reduziert werden können und damit die Präzision des Verfahrens weiter gesteigert wird.

Darüber hinaus werden in einer bevorzugten Ausführung des Verfahrens systematische Fehler in Positionierung und Messungen ermittelt und gezielt kompensiert, wodurch die Präzision wiederum erhöht wird.

### Bezugszeichenliste

- 1: Turbinenbauteil
- 2: Hohlraum für Kühlmedium im Turbinenbauteil
- 3: Kühlungskanal
- 4: Oberfläche des Turbinenbauteils
- 5: erste Schutzschicht
- 6: zweite Schutzschicht (Wärmedämmschicht)
- 7: unerwünschtes, verstopfendes Material in Kühlungskanal
- P₁,..Pₙzu: vermessende Punkte auf Turbinenbauteil im Bereich des Kühlungskanals
- N: Normale auf Bauteiloberfläche
- M: Messrichtung für Schichtdickenbestimmung
- α: Winkel des Kühlungskanals zur Oberfläche
- β: Messwinkel
- d₁, d₂: Schichtdicken
- 30: Kühlungskanal
- 31, 32, 33: scheibenförmige Segmente
- 34: Oberfläche des Turbinenbauteils
- 35: Laserstrahlen
- ε: Bearbeitungswinkel

## Patentansprüche

1. Verfahren zur Bearbeitung eines Turbinenbauteils (1) mit einer Vielzahl unterschiedlicher Kühlungskanäle (3, 30)
**gekennzeichnet durch** die Schritte:
i) Erstellung eines lokalen Referenzkoordinatensystems und Bestimmung von dreidimensionalen Koordinaten der Position der Kühlungskanäle (3, 30) an der Oberfläche (4) des Turbinenbauteils (1) und der Orientierung (α) des Kühlungskanals (3),
ii) Bestimmung von dreidimensionalen Koordinaten von Referenzpunkten (P₁, P₂, ...Pₙ) im Bereich der Austrittsöffnungen der Kühlungskanäle (3) am Turbinenbauteil (1),
iii) Beschichtung des Turbinenbauteils,
iv) Bestimmung der dreidimensionalen Koordinaten der in ii) festgelegten Referenzpunkte (P₁', P₂', P₃', ..., Pₙ') am Turbinenbauteil und Berechnung der Dicke (d₁, d₂) der in Schritt iii) aufgetragenen Beschichtung,
v) ) mittels einem Grundbearbeitungsprogramm zur Verknüpfung von Daten aus den Schritten i), ii) und iv) sowie CAD-Daten der Kühlungskanäle, automatische Erstellung eines Laser-Bearbeitungsprogramms für jeden individuellen Kühlungskanal zur Führung eines Lasers über scheibenförmige Volumensegmente (31-33) des Beschichtungsmaterials in den individuellen Kühlungskanälen (30)
vi) Bewegung eines gepulsten Laserstrahls **durch** Steuerung gemäss dem Laser-Bearbeitungsprogramm über die Fläche jedes der scheibenförmigen Volumensegmente (31-33).

2. Verfahren nach Anspruch 1
**dadurch gekennzeichnet, dass**
in Schritt v) mittels dem Grundbearbeitungsprogramm und der Verknüpfung der Daten aus den Schritten i), ii) und iv) einer oder mehrere der Laserbearbeitungs-Parameter für jeden unterschiedlichen Kühlungskanal automatisch angepasst werden, wobei die Laserbearbeitungs-Parameter die mittlere Laserleistung, mittlere Laserpulsenergie, Pulsrepetitionsrate, Überlappung von einander nachfolgenden Laserpulsen, Laserbewegungsgeschwindigkeit relativ zur Geschwindigkeit der Turbinenbauteilbewegung, Auswahl der scheibenförmigen Volumensegmente und Anzahl Wiederholungen der Bewegung des Laserstrahls über ein gegebenes scheibenförmiges Volumensegment sind.

3. Verfahren nach Anspruch 1 oder 2
**dadurch gekennzeichnet, dass**
die Schritte iii) und iv) entsprechend der Anzahl Schichten in der Beschichtung wiederholt werden.

4. Verfahren nach einem der vorangehenden Ansprüche
**dadurch gekennzeichnet, dass**
die Referenzpunkte (P₁, P₂, P₃,..., Pₙ, P₁', P₂', P₃', ..., Pₙ', P₁", P₂", P₃", ..., Pₙ") auf einer Linie um einen Mittelpunkt (C) der Austrittsöffnung der Kühlkanäle (3) liegen.

5. Verfahren nach Anspruch 4
**dadurch gekennzeichnet, dass**
die Referenzpunkte (P₁, P₂, P₃,..., Pₙ, P₁', P₂', P₃', ..., Pₙ', P₁", P₂", P₃", ..., Pₙ") auf einer Kreislinie liegen.

6. Verfahren nach einem der vorangehenden Ansprüche
**dadurch gekennzeichnet, dass**
die Beschichtungsdicken (d₁, d₂) aufgrund von gemessenen Abständen zwischen den Referenzpunkten (P₁, P₂, ... Pₙ) vor einer Beschichtung und den Referenzpunkten (P₁', P₂', ..., Pₙ', P₁", P₂", ..., Pₙ") nach einer Beschichtung und dem Messwinkel (β) zur Normalen (N) auf der Oberfläche (4) des Turbinenbauteils (1) berechnet wird.

7. Verfahren nach einem der vorangehenden Ansprüche
**dadurch gekennzeichnet, dass**
die Beschichtungsdicken (d₁, d₂) im Bereich von ausgewählten Kühlungskanälen (3) bestimmt werden, die für eine Gruppe von Kühlungskanälen repräsentativ sind und die Beschichtungsdicken (d₁, d₂) an den nicht ausgewählten Kühlungskanälen durch Intrapolation oder Extrapolation bestimmt werden.

8. Verfahren nach einem der vorangehenden Ansprüche
**dadurch gekennzeichnet, dass**
das Gewicht einer Beschichtung durch Wägen des Turbinenbauteils (1) vor und nach einer Beschichtung bestimmt wird und die Beschichtungsdicken (d₁, d₂) nur an auserwählten Turbinenbauteilen eines Satzes identischer Turbinenbauteile bestimmt werden und anhand der Beschichtungsgewichte für die restlichen Turbinenbauteile in dem Satz identischer Turbinenbauteile die Beschichtungsdicken durch Skalierung bestimmt werden.

9. Verfahren nach einem der vorangehenden Ansprüche
**dadurch gekennzeichnet, dass**
eine erste Schicht, die in Schritt iii) auf das Turbinenteil aufgetragen wird, eine metallische Schutzschicht ist.

10. Verfahren nach Anspruch 9
**dadurch gekennzeichnet, dass**
die metallische Schutzschicht ein MCrAIY ist, wobei M Ni oder Co ist.

11. Verfahren nach Anspruch 9 oder 10
**dadurch gekennzeichnet, dass**
eine zweite Schicht, die auf die erste Schicht aufgetragen wird, eine keramische Wärmedämmschicht ist.

12. Verfahren nach einem der vorangehenden Ansprüchen
**dadurch gekennzeichnet, dass**
die Entfernung des Beschichtungsmaterials in den Kühlungskanälen (3) mittels einem gepulsten Festkörper-Laser, Faserlaser oder Scheibenlaser durchgeführt wird.

13. Verfahren nach Anspruch 12
**dadurch gekennzeichnet, dass**
die Laserpulse des gepulsten Lasers Pulslängen in einem Bereich von 5-2000 ns und eine Intensität in einem Bereich von 5*10⁶ W/cm² bis 3*10⁹ W/cm² besitzen.

14. Verfahren nach einem der vorangehenden Ansprüche
**dadurch gekennzeichnet, dass**
für mindestens einen der Schritte i), ii) und iv) ein konoskopischer Messkopf, ein berührungsloser optischer Laserabstandssensor gemäss Triangulationsprinzip, ein berührungsloser optischer konoskopischer Abstandssensor, ein berührungsloser optischer interferometrischer Abstandssensor, ein Messtaster ("touch probe") oder ein Wirbelstromsensor verwendet wird.

15. Verfahren nach einem der vorangehenden Ansprüche
**dadurch gekennzeichnet, dass**
mindestens einer der Schritte i), ii) und iv) mittels einem Laser-Abstandssensor zusammen mit einem hochauflösenden Kamerasystem, die beide auf einem Industrieroboter montiert sind, durchgeführt wird.

16. Verfahren nach Anspruch 15
**dadurch gekennzeichnet, dass**
das Turbinenbauteil (1) auf einem Drehtisch montiert ist, der unabhängig vom Industrieroboter bewegbar ist.

17. Verfahren nach Anspruch 1
**dadurch gekennzeichnet, dass**
der gepulste Laser mittels einem Laser-Galvanoscanner bewegt wird.
